# EUROPEAN PATENT APPLICATION

(11) **EP 4 772 382 A1**
(43) Date of publication of application: **08.07.2026**
(21) Application number: 25206015.7
(22) Date of filing: 01.10.2025
(51) Int. Cl.: B60K 35/21, B60K 35/22

(54) **WINDSHIELD DISPLAY**

(30) Priority: 03.01.2025 KR 20250001109
(71) Applicant: Hyundai Mobis Co., Ltd., Gangnam-gu Seoul 06141 (KR)
(72) Inventor: KIM, Kyung Hoon, 16891 Yongin-si, Gyeonggi-do (KR)
(74) Representative: Jung, Minkyu

(57) **Abstract**

A windshield display includes a display portion that overlaps one region of a windshield and extends from a lower end of the windshield in a width direction of a vehicle. The display portion includes a plurality of display regions, content displayed in the display regions changes depending on a display mode, each of the display regions can be displayed independently or in conjunction with another display region, and the display portion has adjustable transparency.

## Description

### CROSS REFERENCE TO RELATED APPLICATION

This application claims priority to and the benefit of Korean Patent Application No. 10-2025-0001109, filed on January 3, 2025, the disclosure of which is incorporated herein by reference in its entirety.

### BACKGROUND

### 1. Field of the Invention

The present invention relates to a windshield display, and more particularly, to a windshield display that displays various functions and information according to the situation of a vehicle and an operation performed by a driver.

### 2. Description of Related Art

Recently, as people's vehicle usage time has increased and people have spent more time inside their vehicles, vehicles are now being developed to provide more functions to users.

A plurality of displays may be used inside a vehicle to easily control and display numerous functions of the vehicle. A user may operate a display to access various functions and even control the functions of a vehicle.

However, it is not easy to provide displays of sufficient sizes in the limited space inside a vehicle, and it is also difficult to operate each of the displays. Particularly, since a driver who is driving needs to operate the display while looking ahead and around the vehicle, it is important not to be distracted by operating the display.

There is a need for a display that can be implemented in a sufficient size to provide a user with various functions and a vehicle display by which the user can easily operate the display.

### SUMMARY

One embodiment of the present invention is directed to providing a windshield display that displays various information and functions without interfering with a driver's line of sight.

The task to be solved by the present invention is not limited to the task described above, and other tasks not described herein will be clearly understood by those skilled in the art from the description below.

A windshield display according to one embodiment of the present invention includes a display portion that overlaps one region of a windshield and extends from a lower end of the windshield in a width direction of a vehicle, wherein the display portion includes a plurality of display regions, content displayed in the display regions changes depending on a display mode, each of the display regions is displayed independently or in conjunction with another display region, and the display portion has adjustable transparency.

The display portion may include a first display region, a second display region, and a third display region, the first display region may be disposed in front of a driver seat, the third display region is disposed in front of a front passenger seat, and the second display region may be disposed between the first display region and the third display region.

Each of the display regions may be partitioned into a plurality of windows according to a user operation.

The first display region may display driving information or information of an instrument panel of a cluster.

When the display mode is a peripheral display mode, images of left and right lanes of the vehicle may be displayed on both sides of a combined display region including the first display region and the second display region.

A center of the combined display region including the first display region and the second display region may display a rear view image of the vehicle.

When the display mode is an expanded field of view mode, an image of a road surface corresponding to a portion where a hood is disposed based on a driver line of sight may be displayed in the first display region and the second display region.

When the display mode is a navigation mode, navigation information may be displayed in the first display region and the second display region.

The third display region may display information about a time remaining until arrival and a current location based on a distance from a starting point to a destination.

Display content of the third display region may not be detected from a driver line of sight sitting in the driver seat.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a view showing a windshield display according to one embodiment of the present invention;
FIGS. 2, 3, and 4 are views showing states in which the windshield display according to one embodiment of the present invention is partitioned into a plurality of regions;
FIG. 5 is a view showing a state in which the windshield display according to one embodiment of the present invention displays information;
FIG. 6 is a view showing a state in which the windshield display according to one embodiment of the present invention is displayed in a peripheral display mode;
FIG. 7 is a view showing a state in which the windshield display according to one embodiment of the present invention is displayed in an expanded field of view mode;
FIG. 8 is a view showing a state in which the windshield display according to one embodiment of the present invention is displayed in a navigation mode; and
FIGS. 9 and 10 are views showing states in which at least a portion of each region of the windshield display according to one embodiment of the present invention displays a continuous image.

### DETAILED DESCRIPTION

The present invention may be modified in various ways and has various embodiments, and specific embodiments are illustrated in the drawings and will be described in detail. However, this is not intended to limit the present invention to any particular embodiment, and it is to be understood to include all modifications, equivalents, or substitutions that fall within the scope of the ideas and techniques of the present invention. In describing the present invention, when it is determined that detailed description of a related known technology may obscure the gist of the present invention, the detailed description thereof is omitted.

Although the terms "first," "second," and the like may be used to describe various components, the components are not limited by the above terms. The above terms are used solely to distinguish one component from another.

The terminology used in the present application is used only to describe particular embodiments and is not intended to limit the present invention. Singular expressions include plural expressions unless the context clearly indicates otherwise. In the present application, it should be understood that terms such as "includes" or "has" are intended to specify the presence of a feature, number, step, operation, component, part or combination thereof described in the specification, but do not exclude in advance the possibility of the presence or addition of one or more other features, numbers, steps, operations, components, parts or combinations thereof.

Also, throughout the specification, when "connected" is described, this does not only mean that two or more components are directly connected, but also that two or more components are indirectly connected through other components, that they are electrically connected as well as physically connected, or that they are referred to by different names depending on location or function but are one.

Additionally, when one component is described as being formed or disposed "above (upper) or below (lower)" another component, above (upper) or below (lower) includes not only cases where the two components are in direct contact with each other, but also cases where one or more still other components are formed or disposed between the two components. Additionally, when expressed as "above (upper) or below (lower)," it may include the meaning of not only the upward direction but also the downward direction based on one component.

Hereinafter, one embodiment of a windshield display according to the present invention will be described in detail with reference to the attached drawings. When describing with reference to the attached drawings, identical or corresponding components are denoted by the same drawing numbers and redundant descriptions thereof are omitted.

A windshield 10 may be disposed at the front of the vehicle. The windshield 10 may cover the front of the vehicle, and the driver may look ahead through the windshield 10. For the driver, looking ahead through the windshield 10 may be the most important factor in driving.

The driver may check a display device disposed inside the vehicle to check various functions or information of the vehicle. When the driver checks a display while driving, he or she may lose focus on the road ahead and around the vehicle for a certain period of time and become distracted.

There is a need for a display device that provides the driver with necessary information without significantly distracting the driver's line of sight or attention. The present invention may provide various information and functions through the windshield display 100 displayed in the windshield 10.

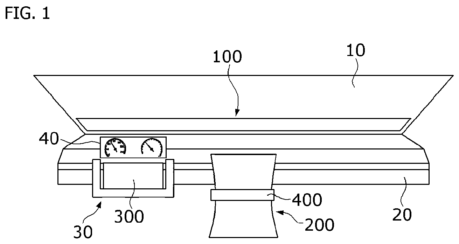

FIG. 1 is a view showing a windshield display according to one embodiment of the present invention.

The windshield display 100 according to one embodiment of the present invention may include a display portion 101 that overlaps one region of the windshield 10 and extends from a lower end of the windshield 10 in a width direction of the vehicle. The windshield display 100 may be disposed at a lower end of the windshield 10 as shown in FIG. 1.

A center and upper end of the windshield 10 may correspond to the front of the vehicle and a direction in which the driver looks at elements such as traffic lights. Therefore, when the display portion 101 is formed on a lower side of the windshield 10, there is an advantage in that the degree to which the display interferes with a user's line of sight in which he or she looks ahead may be reduced.

The display portion 101 may be formed in the width direction of the vehicle at the lower end of the windshield 10. Since the display portion 101 is a portion that displays various information and functions, it is necessary to secure a sufficient area for the display portion 101. The present invention provides the windshield display 100 in which the display portion 101 is formed on the windshield 10 covering the front of the vehicle, and the display portion 101 is formed long in the width direction of the vehicle to have a sufficient area.

In the direction of the driver's line of sight, the windshield display 100 may be disposed at an upper end of a cockpit module 20 disposed at the front of the vehicle. The driver may adjust his/her line of sight downward at a predetermined angle to look at the display portion 101. The display portion 101 may be formed wide from left to right, thereby ensuring visibility for the driver. That is, the information and functions displayed on the display portion 101 may be displayed in sizes that can be recognized even when the driver looks at the information and functions for a short time.

The display on the windshield display 100 may be operated by the user. It is possible to operate the windshield display 100 through a display provided separately from the windshield display 100. The display may be a center display 200 disposed on a center fascia side of the vehicle. Alternatively, the display may be a horn cover display disposed on a horn cover of a vehicle steering wheel 30.

It is also possible to operate the windshield display 100 in a way other than a separate display. For example, a control portion for operating the windshield display 100 may be provided in the vehicle cockpit module 20. Alternatively, buttons and knobs for operating the windshield display 100 may be provided around the vehicle steering wheel 30. Alternatively, the windshield display 100 may be operated through voice recognition. A sensor that receives a passenger's voice may be disposed in the vehicle, and the passenger may change the display content of the windshield display 100 through the voice.

Alternatively, the windshield display 100 may be operated by pairing a mobile device with the vehicle. In this case, an application for operating the windshield display 100 may be installed in the mobile device.

There are no restrictions on a method of operating the windshield display 100, and any method that can be easily used by the driver and passenger of the vehicle depending on the situation may be applied.

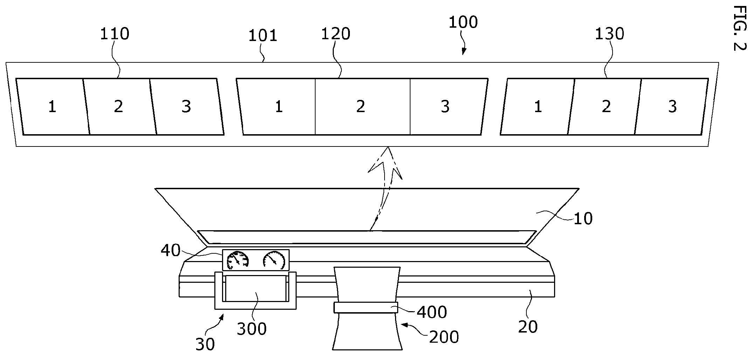

FIGS. 2 to 4 are views showing states in which the windshield display according to one embodiment of the present invention is partitioned into a plurality of regions.

Referring to FIGS. 2 to 4, the windshield display 100 according to one embodiment of the present invention may include the display portion 101. The display portion 101 may correspond to a configuration that performs a display function. The display portion 101 of the windshield display 100 may actually provide a display function. The display portion 101 may be maintained in a transparent state when the display portion 101 does not provide a display function. In this case, the display portion 101 may perform the same function as the windshield 10. When the display portion 101 performs a display function, the transparency of the display portion 101 may be adjusted. The display function may be controlled so as not to interfere with the driver's driving by adjusting the transparency of the display portion 101.

The display portion 101 may include a plurality of display regions. In FIGS. 2 to 4, the display portion 101 is partitioned into a total of three display regions. The display portion 101 may include a first display region 110, a second display region 120, and a third display region 130.

Each of the display regions may be disposed in the width direction of the vehicle. In the case of this embodiment, the first display region 110 may be disposed in front of the driver seat. The third display region 130 may be disposed in front of the front passenger seat. The second display region 120 may be disposed between the first display region 110 and the third display region 130.

The plurality of display regions may display different content.

For example, the first display region 110 may be disposed in front of the driver and may display helpful information for driving. That is, the first display region 110 may display information about the driving information of the vehicle and the environment surrounding the vehicle.

When a large amount of information for the driver is provided, helpful information for driving may also be displayed in the second display region 120. For example, navigation information may be displayed in the second display region 120. The driver may check the driving information of the vehicle through the first display region 110 and ascertain the route to the destination, remaining time, and the like through the second display region 120.

The third display region 130 may be disposed in front of the front passenger seat, and information that is not related to driving may be displayed. Convenience functions such as media playback may be displayed in the third display region 130. The passenger sitting in the front passenger seat may enjoy convenient features while moving.

A size of each of the display regions may be set to the same, or the display regions may be set differently. In the case of the second display region 120, since the second display region 120 may be disposed in a center of the vehicle and may be a region with high usability for both the driver and passenger, the second display region 120 may be set larger than the first display region 110 and the third display region 130.

The display regions shown in FIGS. 2 to 4 may each display a plurality of widgets W. The display region may be partitioned into a plurality of regions, and each of the regions may display a different widget W.

FIG. 2 shows the windshield display 100 that has three display regions 110, 120, and 130, each of which is partitioned into three regions. In this embodiment, the windshield display 100 may be partitioned into a total of nine regions. Each of the regions may display a different widget W to display information about different content or functions, and it is also possible for at least some regions to display the same widget W.

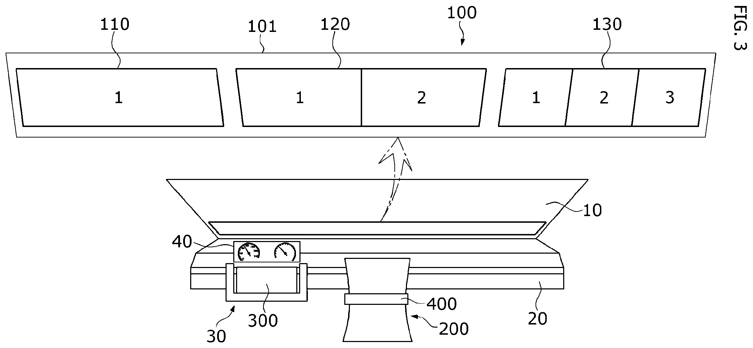

The display region of the windshield display 100 shown in FIG. 3 is shown as being partitioned into different numbers of regions. The first display region 110 may be formed as one single region. The third display region 130 may be partitioned into two regions. The second display region 120 may be partitioned into three regions.

The method of partitioning the display region shown in FIGS. 2 and 3 is an example, and the user may change the number of regions included in each of the display regions. When much information is required at the same time, or when a plurality of functions are performed at the same time, the user may partition the display region into a plurality of regions. After partitioning the display region, the necessary functions and information are confirmed by displaying a plurality of widgets W.

When the required information is limited or focused on a specific function, the user may not partition the display region. Therefore, the display region may display a single widget W or a few widgets W.

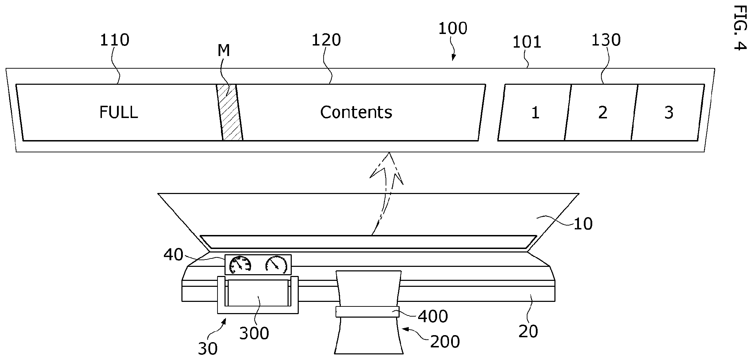

FIG. 4 shows a state in which the first display region 110 and the second display region 120 are connected. The first display region 110 to the third display region 130 are disposed on the display portion 101. Since the display portion 101 is a portion that performs a display function, the entire region of the display portion 101 may perform the display function.

The display regions may be spaced a predetermined interval apart from each other in the display portion 101. The separated portion remains transparent, ensuring the driver's front field of view. Alternatively, it is also possible for the driver to connect or merge at least some of the display regions to form a single region.

FIG. 4 shows a state in which a display function is performed in a space M between the first display region 110 and the second display region 120 to connect the first display region 110 and the second display region 120. The first display region 110 and the second display region 120 may be connected to display a continuous image.

Even when the first display region 110 and the second display region 120 are connected, the third display region 130 may be separated and display separate information or functions. The third display region 130 may be partitioned into a plurality of regions, unlike the connected first display region 110 and second display region 120.

Each of the display regions may have the default display content set depending on its arrangement. The first display region 110 disposed adjacent to the driver may be set to display information related to the driving of the vehicle.

The second display region 120 disposed adjacent to the first display region 110 may display driving-related information, similar to the first display region 110. At least a portion of the second display region 120 may display information and functions that are not related to driving.

The driver may recognize information necessary for driving the vehicle through the first display region 110 and the second display region 120.

Each of the display regions displayed on the windshield 10 may not be visually detected at specific locations. The display region may be determined to be detectable or not depending on an angle formed between the display region and the observer's line of sight.

The windshield display 100 may be implemented by attaching a film to the windshield 10 and projecting light onto the region to which the film is attached. The cockpit module 20 may be provided with a projector that projects light onto the windshield 10. The film may be formed so that its content is perceptible only at the user's specific viewing angle.

The third display region 130 may not be detectable from the line of sight of the driver sitting in the driver seat. That is, the third display region 130 may be configured to simply perform the function of the windshield 10 for the driver. The third display region 130 may be seen transparently from the driver seat. At the same time, the third display region 130 may be detected by the passenger sitting in the front passenger seat.

Even when information or functions that are not related to driving are displayed in the third display region 130, there is less concern about the driver being distracted because the information or functions are not detected by the driver's line of sight.

Likewise, the first display region 110 may not be detected from the line of sight of the passenger sitting in the front passenger seat. Alternatively, since there is less need to manage attention in the front passenger seat, the first display region 110 may be detected in the entire driver seat and front passenger seat.

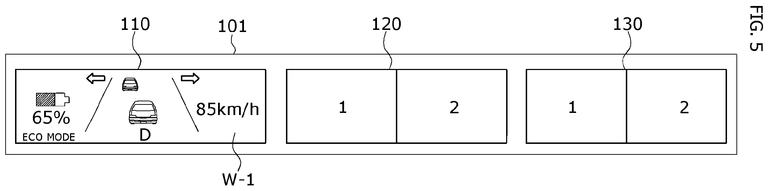

FIGS. 5 to 8 show states in which the windshield display is displayed in various display modes.

The windshield display 100 may have different displayed content and locations depending on a plurality of display modes. The user may change the display mode and perform control so that information or function he or she wants is displayed on the windshield display 100.

The display modes shown in FIGS. 5 to 8 are examples, and it is also possible for the windshield display 100 to display different information and content.

Since the widgets W displayed in the display modes are different, the widgets W may be referred to as a first widget W-1 to a seventh widget W-7. As will be described below, the first widget W-1 may provide cluster information. The second widget W-2 may provide a rear view image of the vehicle. The third widget W-3 may provide a side view image of the vehicle. The fourth widget W-4 may provide an image of the road in the field of vision obscured by a hood 12. The fifth widget W-5 may provide a navigation function. The sixth widget W-6 may provide an additional navigation function. The seventh widget W-7 may provide a media playback function.

The above-described widgets W are examples, and widgets W providing other functions may be further included.

FIG. 5 is a view showing a state in which the windshield display according to one embodiment of the present invention displays information.

FIG. 5 may correspond to a default mode. The default mode may correspond to a display mode that is displayed when a separate operation is not performed by the user.

The windshield display 100 may include the first display region 110 to the third display region 130. The second display region 120 and the third display region 130 may display the widgets W that may include specific information or control the functions of the vehicle.

The first display region 110 is a region disposed in front of the driver. Accordingly, information or functions that can be utilized by the driver may be displayed in the first display region 110. As shown in FIG. 5, various information in an instrument panel 40 of a cluster may be displayed in the first display region 110. The cluster may be disposed in front of the driver seat as shown in FIG. 1 and may be disposed between a steering wheel 30 and the windshield 10. The cluster may display information needed for driving, such as the speed, remaining battery level, and driving mode of the vehicle.

The first widget W-1 may be displayed in the first display region 110. The information in the instrument panel 40 of the cluster may be disposed in the first widget W-1 so that the driver can recognize helpful information for driving while looking ahead. FIG. 5 shows a state in which the speed, remaining battery level, and driving mode of the vehicle, and images of the surroundings of the vehicle are displayed in the first display region 110. In this way, the first display region 110 may basically display the first widget W-1, and additional information such as images of the surroundings of the vehicle may also be displayed.

The first display region 110 may display the first widget W-1 to display the information in the instrument panel 40 of the cluster, and it is also possible for the cockpit module 20 not to be provided with a separate cluster. The existing cluster may be provided to protrude upward from the cockpit module 20, which may obscure a portion of the driver's line of sight. When the first display region 110 basically performs the cluster function, since a separate cluster is not required, the driver's field of vision may be secured.

The second display region 120 and the third display region 130 may not have separate functions set in the default mode. That is, as shown in FIG. 5, a specific widget W may not be displayed. The user may operate the content displayed in the second display region 120 and the third display region 130 by operating the center display 200 or the like.

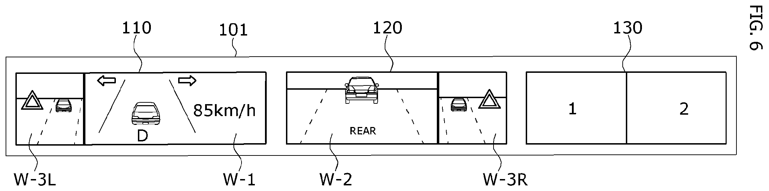

FIG. 6 is a view showing a state in which the windshield display according to one embodiment of the present invention is displayed in a peripheral display mode.

Referring to FIG. 6, when the peripheral display mode is implemented, images of the surroundings of the vehicle may be displayed on the windshield display 100. The images of the surroundings of the vehicle may include rear and side images of the vehicle. That is, in the peripheral display mode, the second widget W-2 and the third widget W-3 may be displayed on the windshield display 100.

The first display region 110 may basically display the first widget W-1. As shown in FIG. 6, the first display region 110 may be partitioned into a plurality of regions. Some of the partitioned regions may display the first widget W-1.

The third widget W-3 may provide a side view image of the vehicle. The third widget W-3 may provide images of the left and right side view images of the vehicle and may be displayed through two regions. In the case of this embodiment, the third widget W-3 is shown as being displayed on the left side of the first display region 110 and the right side of the second display region 120. When a plurality of images are provided, since there is a possibility of confusing the driver's sense of direction, it is necessary to provide an intuitive display to the driver.

Therefore, the image of the left side of the vehicle may be displayed on the driver's left side, and the image of the right side of the vehicle may be displayed on the driver's right side. To implement this, the image of the left side of the vehicle may be displayed on the left side of the first display region 110, and the image of the right side of the vehicle may be displayed on the right side of the second display region 120. Alternatively, it is also possible for the third widget W-3 to be displayed on each side of the first display region 110.

The rear view image of the vehicle may be displayed through the second widget W-2. In the case of this embodiment, the state in which the second widget W-2 is displayed in the second display region 120 is shown. Portions of the first widget W-1 and the third widget W-3 are displayed in the first display region 110, and the display position of the second widget W-2 may be set so that the second widget W-2 can be displayed in a sufficient size.

The right end of the second display region 120 may display an image of the right side of the vehicle, and the remaining region may display the rear view image of the vehicle so that the driver can easily recognize which direction of the vehicle each image is for. The second widget W-2 may display text and a symbol indicating that the image is the rear view image of the vehicle. Similarly, the third widget W-3 may display text and a symbol indicating the side view image and direction of the vehicle.

The second widget W-2 may provide a warning of an object approaching from the rear of the vehicle. The second widget W-2 may provide a rear view image of the vehicle and display a warning sign when it is determined that an object such as another vehicle present behind the vehicle is approaching the driving vehicle or is at increased risk of collision.

The third widget W-3 may provide a warning of an object approaching from the side of the vehicle. The third widget W-3 may provide an image of the side of the vehicle and may also display a warning sign when it is determined that an object such as another vehicle present on the side of the vehicle is approaching the driving vehicle or is at increased risk of collision. FIG. 6 shows a triangle-shaped symbol.

The second widget W-2 and third widget W-3 may change color to alert the driver when a nearby object or a collision risk is detected. When displaying a warning, the widget W may light up in a specific color and display a word or symbol indicating danger. For example, when an approaching vehicle is detected from the right side of the vehicle, the corresponding direction of the third widget W-3 may light up in a specific color (for example, red).

The peripheral display mode may actively display images of the surroundings of the vehicle, and it is also possible to display images of the surroundings of the vehicle only in specific situations. When the peripheral display mode is set, the display region may basically display the widget W that the user wants. The corresponding widget W may be a widget W that displays images of the surroundings of the vehicle, and may also be a widget W that provides functions such as navigation or media playback.

When an object is detected around the vehicle while a widget W that provides a function other than the provision of the images of the surroundings of the vehicle is displayed, a widget W that provides an image in a direction where the object is located may be displayed on the display portion 101. That is, the second widget W-2 or the third widget W-3 may be displayed in a dangerous situation. The second widget W-2 or the third widget W-3 may be displayed in the display portion 101 in a pop-up manner. To easily provide information to the driver, the second widget W-2 or the third widget W-3 may be displayed in the first display region 110 or the second display region 120.

The second widget W-2 or the third widget W-3 may be displayed in a pop-up manner and may push out the widget W that was previously displayed. The previously displayed widget W may move or be reduced by the newly displayed second widget W-2 or third widget W-3, and the second widget W-2 or the third widget W-3 may be displayed in the corresponding region. Alternatively, it is also possible for an existing widget W to be displayed as the second widget W-2 or the third widget W-3.

When a plurality of images of the surroundings of the vehicle are continuously provided, it may require a high level of concentration from the driver, which may increase driver fatigue, and there is a concern that a direction of the image displayed in the widget W may be confusing. It is also possible to set the peripheral display mode to provide the images of the surroundings of the vehicle only at specific times, such as in dangerous situations, as above.

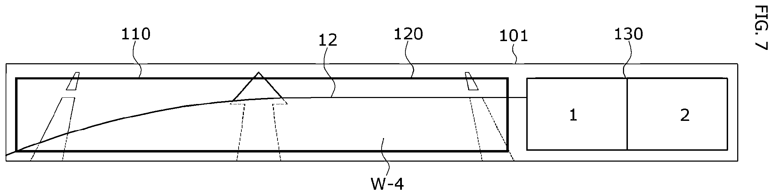

FIG. 7 is a view showing a state in which the windshield display according to one embodiment of the present invention is displayed in an expanded field of view mode.

Referring to FIG. 7, when the expanded field of view mode is implemented, the windshield display 100 may display an image of the road in the field of vision obscured by the hood 12 of the vehicle. In the expanded field of view mode, the fourth widget W-4 may be displayed on the windshield display 100.

The hood 12 of the vehicle is configured to extend to the front of the vehicle, and the hood 12 may cover the road surface in front of the vehicle based on the driver seat. When there is a sign on the road surface to guide the driving path or there is an obstacle, the sign and obstacle may be obscured from the driver's line of sight by the hood 12. When the front and bottom of the vehicle are obscured due to a narrow alley or a slope of the road while the vehicle is driving, the driver may feel the need to secure the driver's front field of view.

The fourth widget W-4 may provide the driver with an image of the region obscured by the hood 12. The front of the vehicle may be provided with a sensor that captures the front and bottom of the vehicle. The image captured by the sensor may cause the portion that is obscured from the driver's line of sight to be displayed on the display portion 101 that overlaps the hood 12 through a separate correction process.

When the fourth widget W-4 is displayed on the display portion 101, the field of vision when the hood 12 does not exist in the driver's line of sight may be provided. That is, the driver may get the impression that the hood 12 has become transparent.

In the expanded field of view mode, the windshield display 100 may display a detection box that detects an obstacle present on the road surface. The detection box may be displayed in the form of a box surrounding an obstacle, such as a pothole, when the obstacle is formed on the road surface. As the driver drives the vehicle, the detection box may move to overlap the obstacle in the driver's line of sight. The detection box allows the user to easily recognize the obstacle on the road surface.

FIG. 7 shows a state in which the first display region 110 and the second display region 120 are connected to entirely display the fourth widget W-4. The hood 12 may be formed to extend in the width direction of the vehicle and may cover a wide area at the lower end of the windshield 10. The hood 12 may be disposed over the entire first display region 110 and second display region 120 in the driver's line of sight. Therefore, the fourth widget W-4 may be displayed over the entire first display region 110 and the second display region 120.

The fourth widget W-4 may provide an indication of the distance to the front bumper of the vehicle for the convenience of the driver. This may be similar to having a scale displayed to help gauge the rear length of the vehicle when providing the rear view image by a rear camera. The driver may recognize the distance between the front bumper of the vehicle and an object on the road when driving in a narrow alley through the fourth widget W-4.

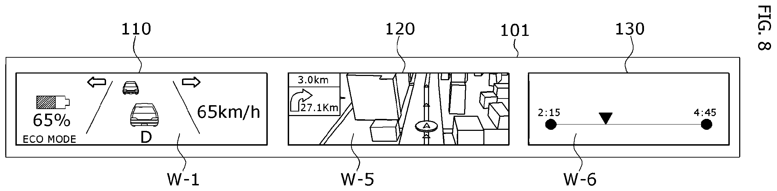

FIG. 8 is a view showing a state in which the windshield display according to one embodiment of the present invention is displayed in a navigation mode.

Referring to FIG. 8, in the navigation mode, the second display region 120 and the third display region 130 may display the fifth widget W-5 providing a navigation function and the sixth widget W-6 providing a navigation additional function, respectively.

Even in the navigation mode, the first widget W-1 may be displayed in the first display region 110. Therefore, the navigation function may be provided through the second display region 120 and the third display region 130.

The fifth widget W-5 may provide a navigation function. The fifth widget W-5 may display the road on which the vehicle is driving and the route on which the driver will drive the vehicle, centered on the vehicle. The fifth widget W-5 may be displayed in the second display region 120. In the case of this embodiment, the state in which the entire second display region 120 displays the fifth widget W-5 is shown. Alternatively, it is also possible for the fifth widget W-5 to be displayed in at least a portion of the second display region 120. In this case, another widget W may be displayed in the remaining region.

The third display region 130 may be located in front of the passenger sitting in the front passenger seat and may be a portion that can be primarily used by the passenger sitting in the front passenger seat. Accordingly, the sixth widget W-6 linked to the fifth widget W-5 may be displayed in the third display region 130. Instead of displaying specific vehicle location or surrounding road information, the sixth widget W-6 may display the approximate location, remaining time, remaining distance, and the like of the vehicle. The sixth widget W-6 shown in FIG. 8 expresses the current location of the vehicle as a ratio on a vertical line connecting the starting point and the destination. Additionally, the departure and arrival times of the vehicle may be displayed.

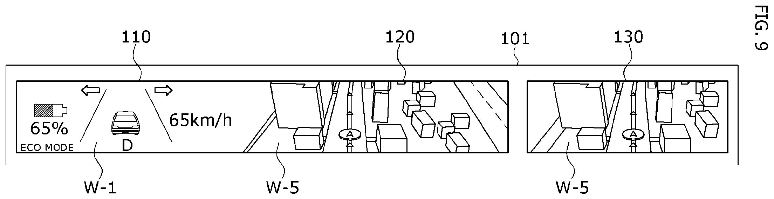

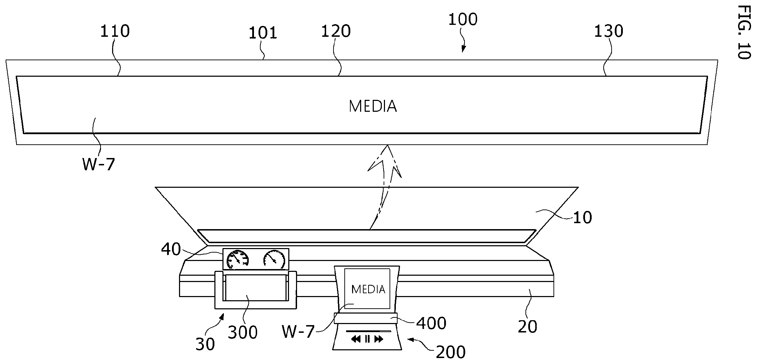

FIGS. 9 and 10 are views showing states in which at least a portion of each region of the windshield display according to one embodiment of the present invention displays continuous images.

Referring to FIG. 9, the first display region 110 to the third display region 130 may display the same widget W, and the regions are shown as being separated. The first display region 110 and the second display region 120 may perform the display function in a combined state.

When the first display region 110 and the second display region 120 are combined, the boundary between the first display region 110 and the second display region 120 may disappear and the widget W may be displayed. The first display region 110 may display the first widget W-1, which is the default widget W. The first widget W-1 may be displayed in a narrower region than when the first display region 110 is separated from the second display region 120. The first widget W-1 of FIG. 9 may be displayed more densely on the left side of the first display region 110.

It is illustrated that the fifth widget W-5 is displayed in at least a portion of the first display region 110 and the second display region 120. The fifth widget W-5 may be displayed over the entire second display region 120 and at least a portion of the first display region 110. Alternatively, it is also possible for the first widget W-1 not to be displayed in the first display region 110 and the fifth widget W-5 to be displayed instead.

The left edge of the fifth widget W-5 may become more transparent toward the left, and may be naturally connected to the first widget W-1. This may allow the first widget W-1 and the fifth widget W-5 to provide a continuous image.

The fifth widget W-5 that is the same as the second display region 120 may be displayed in the third display region 130. The driver and the passenger sitting in the passenger seat may see the same widget W, and focus on different display regions.

FIG. 10 shows a state in which the entire first display region 110 to third display region 130 are connected to display a single widget W. FIG. 10 shows, as an example, a state in which the seventh widget W-7 that provides a media function is displayed.

When utilizing the media feature, the user may have a need to view over a wide area. The boundaries between the first display region 110 to the third display region 130 disappear, and the first display region 110 to the third display region 130 may be connected to form a single display region.

A widget W may be displayed in the corresponding display region, and the driver and the passenger may utilize the functions provided by the widget W on a wide screen. The third display region 130 may be set so as not to be detected from the field of vision of the driver sitting in the driver seat, and the first display region 110 may be set so as not to be detected from the field of vision of the passenger sitting in the front passenger seat. However, in the case of providing a continuous display function by utilizing the entire display region as in this embodiment, the above settings may be changed and applied. That is, the entire display region may be detected from the field of vision of the driver sitting in the driver seat and the field of vision of the passenger sitting in the front passenger seat.

When operating the seventh widget W-7 that provides a media function, a display provided separately from the windshield display 100 may be utilized. For example, there may be the center display 200 or a horn cover display 300.

The center display 200 may be a display which is provided inside the vehicle and which can be operated by the passengers. The center display 200 may be disposed in front of the cockpit of the vehicle, and the user may operate the windshield display 100 by touching the center display 200 or operating a control plate 400 disposed on one surface of the center display 200. The driver sitting in the driver seat may operate the windshield display 100 by operating the horn cover display 300 provided on the steering wheel 30.

According to one embodiment of the present invention, a display portion extending in a width direction of a vehicle from a lower end of a windshield includes a plurality of display regions, and the display regions display various information and functions depending on a display mode, thereby performing a display function during driving without interfering with the driver's line of sight.

The various beneficial advantages and effects of the present invention are not limited to the above-described contents, and will be more easily understood in the process of describing specific embodiments of the present invention.

Although the present invention has been described above with reference to specific embodiments thereof, it will be understood by those skilled in the art that various modifications and changes may be made to the present invention without departing from the spirit and scope of the present invention as set forth in the claims below.

## Claims

1. A windshield display comprising:
a display portion that overlaps one region of a windshield and extends from a lower end of the windshield in a width direction of a vehicle,
wherein the display portion includes a plurality of display regions, content displayed in the display regions changes depending on a display mode, each of the display regions is displayed independently or in conjunction with another display region, and the display portion has adjustable transparency.

2. The windshield display of claim 1, wherein the display portion includes a first display region, a second display region, and a third display region,
the first display region is disposed in front of a driver seat, the third display region is disposed in front of a front passenger seat, and the second display region is disposed between the first display region and the third display region.

3. The windshield display of claim 2, wherein each of the display regions is partitioned into a plurality of windows according to a user operation.

4. The windshield display of claim 2 or 3, wherein the first display region is configured to display driving information or information of an instrument panel of a cluster.

5. The windshield display of any one of claims 2 to 4, wherein, when the display mode is a peripheral display mode,
images of left and right lanes of the vehicle are displayed on both sides of a combined display region including the first display region and the second display region.

6. The windshield display of claim 5, wherein a center of the combined display region including the first display region and the second display region displays a rear view image of the vehicle.

7. The windshield display of any one of claims 2 to 6, wherein, when the display mode is an expanded field of view mode,
an image of a road surface corresponding to a portion where a hood is disposed based on a driver line of sight is displayed in the first display region and the second display region.

8. The windshield display of any one of claims 2 to 7, wherein, when the display mode is a navigation mode,
navigation information is displayed in the first display region and the second display region.

9. The windshield display of claim 8, wherein the third display region displays information about a time remaining until arrival and a current location based on a distance from a starting point to a destination.

10. The windshield display of any one of claims 2 to 9, wherein display content of the third display region is not detected from a driver line of sight sitting in the driver seat.
